Europäisches Patentamt

European Patent Office

Office européen des brevets

(19)

(11)  EP 0 762 245 B1

(12)  **EUROPÄISCHE PATENTSCHRIFT**

(45) Veröffentlichungstag und Bekanntmachung des Hinweises auf die Patenterteilung:
**14.06.2000  Patentblatt 2000/24**

(51) Int Cl.$^7$: **G05B 13/02**, G05B 13/04, G06F 15/80

(21) Anmeldenummer: **96113054.9**

(22) Anmeldetag: **14.08.1996**

(54) **Verfahren zur Erkennung von fehlerhaften Vorhersagen in einer neuromodellgestützten oder neuronalen Prozessregelung**

Method for detecting a faulty prediction in a neural process control

Méthode de détection d'une prédiction défectueuse dans une commande de processus à réseaux neuronaux

(84) Benannte Vertragsstaaten:
**AT BE CH DE FR GB LI NL**

(30) Priorität: **16.08.1995  DE 19530049**

(43) Veröffentlichungstag der Anmeldung:
**12.03.1997  Patentblatt 1997/11**

(73) Patentinhaber: **Froese, Thomas**
**47918 Tönisvorst (DE)**

(72) Erfinder: **Froese, Thomas**
**47918 Tönisvorst (DE)**

(74) Vertreter: **Luderschmidt, Schüler & Partner GbR**
**Patentanwälte,**
**Postfach 3929**
**65029 Wiesbaden (DE)**

(56) Entgegenhaltungen:
EP-A- 0 534 221       WO-A-94/12948
WO-A-94/25933

- INTELLIGENT SYSTEMS ENGINEERING, Bd. 2, Nr. 2, 1.Januar 1993, Seiten 67-76, XP000384652 HUNT K J ET AL: "ADAPTIVE FILTERING AND NEURAL NETWORKS FOR REALISATION OF INTERNAL MODEL CONTROL"
- IEEE TRANSACTIONS ON NEURAL NETWORKS, Bd. 3, Nr. 4, 1.Juli 1992, Seiten 624-627, XP000290670 LEONARD J A ET AL: "USING RADIAL BASIS FUNCTIONS TO APPROXIMATE A FUNCTION AND ITS ERROR BOUNDS"

EP 0 762 245 B1

**Beschreibung**

Die Erfindung betrifft ein Verfahren zur Erkennung von fehlerhaften Vorhersagen in einer neuromodellgestützen Prozeßregelung, bei der ein mit Prozeßmeßgrößen trainiertes neuronales Netz Aussagen über zukünftige und/oder nicht meßbare Prozeßzustände trifft, die von einem Regler zur Regelung des Prozesses verwendet werden. Ferner bezieht sich die Erfindung auf ein Verfahren zur Erkennung von fehlerhaften Vorhersagen in einer neuronalen Prozeßregelung, bei der ein neuronales Netz mit gemessenen oder berechneten Prozeßmeßgrößen derart trainiert wird, daß die Ausgangsgrößen des neuronalen Netzes entweder auf Sollwerte des Prozesses und/oder Stellgrößen einwirken.

Künstliche neuronale Netze (KNN) sind statistische Approximationsmaschinen, welche durch eine Lernprozedur in die Lage versetzt sind, Merkmalsvektoren eines Systems algorithmisch auf andere Merkmalsvektoren abzubilden, wenn zwischen diesen ein unbekannter algorithmischer Zusammenhang besteht. Wird z.B. bei einem Antibiotika-Fermenter ein (unbekannter) algorithmischer Zusammenhang zwischen bestimmten on-line meßbaren Prozeßmeßgrößen wie ph-Werte, Temperaturen und die Konzentrationen bestimmter Stoffe und Größen vermutet, die nur durch eine aufwendige Laboranalyse bestimmt werden können, kann ein neuronales Netz darauf trainiert werden, aus den on-line meßbaren Größen die nicht on-line meßbare Größe kontinuierlich zu berechnen.

Es sind verschiedene Typen neuronaler Netzwerke und auch verschiedene Lernverfahren für diese neuronalen Netzwerke bekannt (Spies, Marcus: Unsicheres Wissen; Wahrscheinlichkeit, Fuzzy-Logik, neuronale Netze und menschliches Denken/Marcus Spies.-Spektrum, Akad.Verlag., 1993). Die Lernverfahren sind im allgemeinen so ausgelegt, daß sie den statistischen Fehler der Ausgabe eines neuronalen Netzwerkes basiernd auf Beispieldatensätzen schrittweise mit speziellen Algorithmen verringern (z.B. Gradientenabstiegsverfahren) bis dieser nahe Null ist. Das neuronale Netz wird in seinem Verhalten durch diese Methoden an das in den Datensätzen wiedergegebene Verhalten approximiert und kann so beispielsweise das Verhalten eines Prozesses modellhaft nachbilden. Es verhält sich dabei ähnlich einem mehrdimensionalen Polynom höherer Ordnung, welches an vorhandene Stützstellen durch sogenanntes "fitting" angepaßt wird.

Mit einem auf diese Weise erstellten künstlichen neuronalen Netz können gemessene Parameter den jeweiligen unbekannten Parametern zugeordnet werden. So kann das künstliche neuronale Netz beispielsweise bei dem oben beschriebenen Antibiotika-Fermenter in Abhängigkeit vom pH-Wert, der Temperatur und anderen Größen, welche aktuell im Prozeß gemessen werden, voraussagen, welche Produktkonzentration oder Biomasse zum aktuellen Zeitpunkt im Prozeß vorliegt oder sogar, welche Produktkonzentration oder Biomasse zu einem späteren Zeitpunkt vorliegen wird.

Künstliche neuronale Netze können zur Regelung von verfahrenstechnischen Prozessen Verwendung finden. Das neuronale Netz erlernt während der Trainingsphase den Zusammenhang zwischen dem durch gemessene Größen beschriebenen Prozeßzustand der Anlage zum jetzigen Zeitpunkt und der dazugehörigen Produktqualität nach Ablauf der Totzeit. Das neuronale Netz kann als Beobachter in einer modellgestützten Regelung (Feedforwardregelung) eingesetzt werden und dient zur Vorhersage der Auswirkung von Stelleingriffen am Prozeß auf die Produktqualität.

Die Arbeitsweise eines neuronalen Prozeßmodells oder eines neuronalen Prozeßreglers ist beispielsweise aus der Veröffentlichung F.Bärmann, G.-R.Greye und M.Lüdeke, VDI Berichte 1184, "Neuronale Netze, Anwendungen in der Automatisierungstechnik", "Modellgestützte Regelung einer Nachreaktionsanlage mit Neuronalen Netzen" bekannt.

In der oben genannten Publikation wird ein Anwendungsfall beschrieben, bei dem eine nicht sicherheitskritische Anlage mit einem neuronalen Prozeßmodell geregelt wird. Das Prozeßmodell basiert auf einem mehrlagigen Perceptron-Netzwerk nach Rummelhardt et al., welches mit einem Fehler-Rückwärtsfortschreibungsverfahren (Error-Backpropagation-Verfahren) unter Anwendung von Beispieldatensätzen aus dem Prozeß trainiert wurde. Die regelmäßig auftretenden Fehler in den Vorhersagen des neuronalen Prozeßmodells werden durch eine on-line Modellkorrektur zurückgeführt und so nachträglich korrigiert (Feedbackzweig). Bei kritischen Prozessen ist eine derartige Feedbackregelung nicht sinnvoll, da eine Rückführung einer durch das neuronale Netz verursachten Störung zu so stark verzögerten Eingriffen führen kann, daß sogar die Gefahr der Beschädigung der zu regelnden Anlage besteht. Daher werden neuronale Netze im allgemeinen nicht zur Regelung von sicherheitskritischen Anlagen eingesetzt.

Ermittelt ein neuronales Prozeßmodell für einen bestimmten Parametersatz einen Ergebnisvektor, so kann dieser Ergebnisvektor nur dann korrekt sein, wenn in der Nähe des vorherzusagenden Prozeßzustandes eine Stützstelle in den Trainingsdaten vorhanden ist und das neuronale Netz nur interpolieren muß. Je weiter die nächsten Stützstellen in den Trainingsdaten von dem vorherzusagenden Punkt entfernt sind, desto stärker weicht das Verhalten das neuronalen Netzes von dem realen Prozeß ab, da das neuronale Netz in dieser Situation extrapolieren muß. So kann es vorkommen, daß das neuronale Prozeßmodell zwar die meisten Zustände des zu regelnden Prozesses exakt abbildet, in bestimmten Situationen aber völlig falsche Ergebnisse liefert.

Während der Prozeßregelung mit einem neuronalen Prozeßmeodell nach den bekannten Verfahren ist nicht zu erkennen, ob das neuronale Prozeßmodell interpoliert oder extrapoliert, so daß sich auch keine Aussagen über die Größe des Fehlers der getroffenen Vorhersage machen lassen. Dies ist insbesondere deshalb der Fall, weil in einem trainierten neuronalen Netz keine Informationen mehr über die Nähe der einzelnen Stützstellen vorhanden sind.

Werden neuronale Netze mit Prozeßdaten trainiert, ist das durchschnittliche statistische Verhalten dieser neuronalen Netze immer ähnlich. Die Initialisierungsparameter der neuronalen Netze, z.B. die Gewichte ihrer Neuronen, werden jedoch bei jedem Lerndurchlauf zufällig anders eingestellt, so daß zwei neuronale Netze, selbst wenn sie mit identischen Lerndaten trainiert wurden, in der Regel keine identischen Parameter (Gewichte) aufweisen. Wenn neuronale Netze zur Prozeßregelung verwendet werden, kann folglich nicht garantiert werden, daß der Wert der Ausgangsgröße reproduzierbar ist. Daher kann grundsätzlich jeder beliebige Prozeßzustand selbst bei beliebig lange trainierten neuronalen Netzen zu einem Vorhersagefehler führen, deren Größe mit den bekannten Verfahren der neuromodellgestützten Prozeßregelung oder der neuronalen Prozeßregelung nicht ermittel werden kann. Erst der Verlgeich mit dem realen Ergenis zeigt den Fehler der Vorhersage. Die neuronalen Prozeßmodelle oder neuronalen Prozeßregler nach dem Stand der Technik können weder sicherstellen, daß der ausgegebene Wert korrekt ist, noch können sie für ausgegebene Werte eine Schätzung ihres Eigenfehlers durchführen. Eine auf den Aussagen des bekannten neuronalen Netze basierende Prozeßregelung z.B. einer verfahrenstechnischen Anlage kann daher zu erheblichen Qualitätseinbußen, erhöhtem Energieverbrauch und einem großen Sicherheitsrisiko führen.

Die WO-A-94/12948 beschreibt eine Vorrichtung zum Betrieb eines neuronalen Netzwerkes mit fehlerhaften oder fehlenden Daten. Die bekannte Vorrichtung verfügt über ein neuronales Prozeßmodell, d.h. ein Modell, in welchem Größen aus einer Produktion aufeinander abgebildet werden. Darüber hinaus umfaßt die Vorrichtung ein Gültigkeitsmodell und ein Fehlervorhersagemodell, die aber nicht mit denselben Daten trainiert werden, mit denen das eigentliche Prozeßmodell trainiert wird. Neben den obigen Modellen weist die Vorrichtung noch einen Datenvorprozessor auf, der eingehende Datensätze mit den vorher verwendeten Trainingsdatensätzen vergleicht und deren Ähnlichkeit bemißt. Dieses statistische Ähnlichkeitsmaß gibt der Vorprozessor an das Fehlervorhersagemodell weiter, da dieses ohne diese deterministische Schätzung keine Aussage liefern kann. Die Erstellung eines Gültigkeitsmodells und eines Fehlervorhersagemodells ist mit erheblichem Aufwand und auch mit einem Verlust von Nutzdaten für das eigentliche Prozeßmodell verbunden.

Aus der EP-A-0 534 221 ist ein Verfahren zur Verbesserung regeltechnisch wichtiger Parameter bekannt, wobei die Parameter in Betriebspunkten vorab anhand von Modellen errechnet und dann durch Adaption den tatsächlichen Größen angepaßt werden. Bei der Durchführung des Verfahrens ist vorgesehen, daß die lokale Abstimmung durch Berücksichtigung der Streuung der gemessenen Größen erfolgt.

Der Erfindung liegt die Aufgabe zugrunde, ein Verfahren anzugeben, mit dem sich fehlerhafte Vorhersagen in einer neuromodellgestützen oder einer neuronalen Prozeßregelung sicher erkennen lassen.

Die Lösung der Aufgabe erfolgt erfindungsgemäß mit den im Patentanspruch 1 bzw. 6 angegebenen Merkmalen.

Bei dem erfindungsgemäßen Verfahren erfolgt die Verarbeitung der Prozeßmeßgrößen in mindestens zwei getrennten Verarbeitungssträngen, von denen jeder Verarbeitungsstrang ein mit gleichen Daten trainiertes neuronales Prozeßmodell bzw. einen mit gleichen Daten trainierten neuronalen Prozeßregler enthält, wobei die neuronalen Prozeßmodelle bzw. Prozeßregler aber unterschiedlich ausgebildet sind. Sie können sich in ihren Initialisierurgsparametern, z.B. in den Gewichten ihrer Neuronen, und/oder in ihrer Topologie und/oder in ihrem Typ voneinander unterscheiden. So können die neuronalen Prozeßmodelle bzw. neuronalen Prozeßregler beispielsweise auf neuronalen Netzen basieren, die eine unterschiedliche Anzahl von Schichten oder ein unterschiedliche Anzahl von Neuronen pro Schicht aufweisen (Topologie). Ferner können die neuronalen Netze auf der Grundlage von unterschiedlichen mathematischen Algorithmen trainiert worden sein (Typ). Die Ausgangsgrößen der einzelnen neuronalen Prozeßmodelle bzw. Prozeßregler werden miteinander verglichen und aus den Abweichungen der Ausgangsgrößen wird dann auf fehlerhafte Vorhersagen geschlossen. Sofern jedes neuronale Prozeßmodell bzw. jeder neuronale Prozeßregler mehrere Ausgangsgrößen hat, werden die einander entsprechenden Ausgangsgrößen miteinander verglichen.

Werden an die Eingänge der einzelnen neuronalen Prozeßmodelle bzw. Prozeßregler gleiche Prozeßmeßgrößen gelegt, kommen die mit gleichen Daten trainierten Prozeßmodelle oder Prozeßregler unterschiedlicher Ausbildung zu unterschiedlichen Ergebnissen, da die Wissensrepräsentation in jedem neuronalen Netz einzigartig ist. Eine Aussage über die Größe des Vorhersagefehlers kann in vorteilhafter Weise nach den bekannten statistischen Verfahren, z.B. durch Berechnung der Standardabweichung und/oder Streuung aus den Ausgangsgrößen gemacht werden. Hierzu wird aus den jeweils einander entsprechenden Ausgangsgrößen der neuronalen Prozeßregler oder Prozeßmodelle die Standardabweichung oder Streuung berechnet und mit einem vorgegebenen Grenzwert verglichen. Bei Überschreiten des Grenzwertes wird dann auf eine fehlerhafte Vorhersage geschlossen, so daß sich gefährliche oder suboptimale Betriebszustände ausschließen lassen.

Von besonderem Vorteil ist, wenn die zu einem Vorhersagefehler führenden Prozeßmeßgrößen gespeichert und für ein weiteres Training der in den einzelnen Verarbeitungssträngen angeordneten neuronalen Prozeßmodelle bzw. Prozeßregler herangezogen werden. Auf diese Weise läßt sich die Sicherheit der Prozeßregelung weiter erhöhen.

Zur Regelung des Prozesses wird vorteilhafterweise aus den jeweils einander entsprechenden Ausgangsgrößen der einzelnen Prozeßmodelle bzw. Prozeßregler ein Wert ermittelt, der bei einer neuromodellgestützten Prozeßregelung dem Regler zugeführt wird. Bei einer neuronalen Prozeßregelung wird der Wert herangezogen, um auf Sollwerte des Prozesses und/oder Stellgrößen einzuwirken. Dieser Wert ist vorzugsweise der Zentralwert der Ausgangsgrößen der neuronalen Prozeßmodelle bzw. Prozeßregler.

Sofern die neuronalen Netze als Hardware-Komponenten realisiert werden sollen, kann auf Integrierte Schaltungen zurückgegriffen werden, die eine große Anzahl von Neuronen aufweisen. Die neuronalen Netze können aber auch als Software realisiert sein.

Nachfolgend werden unter Bezugnahme auf die Zeichnungen zwei Ausführungsbeispiele der Erfindung näher erläutert.

Es zeigen:

Fig. 1   eine schematische Darstellung eines künstlichen neuronalen Netzes,

Fig. 2   ein Blockschaltbild zur Veranschaulichung einer neuromodellgestützten Prozeßregelung mit mehreren jeweils ein neuronales Prozeßmodell enthaltenden Verarbeitungssträngen gemäß der Erfindung und

Fig. 3   ein Blockschaltbild zur Veranschaulichung einer neuronalen Prozeßregelung mit mehreren jeweils einen neuronalen Prozeßregler enthaltenden Verarbeitungssträngen.

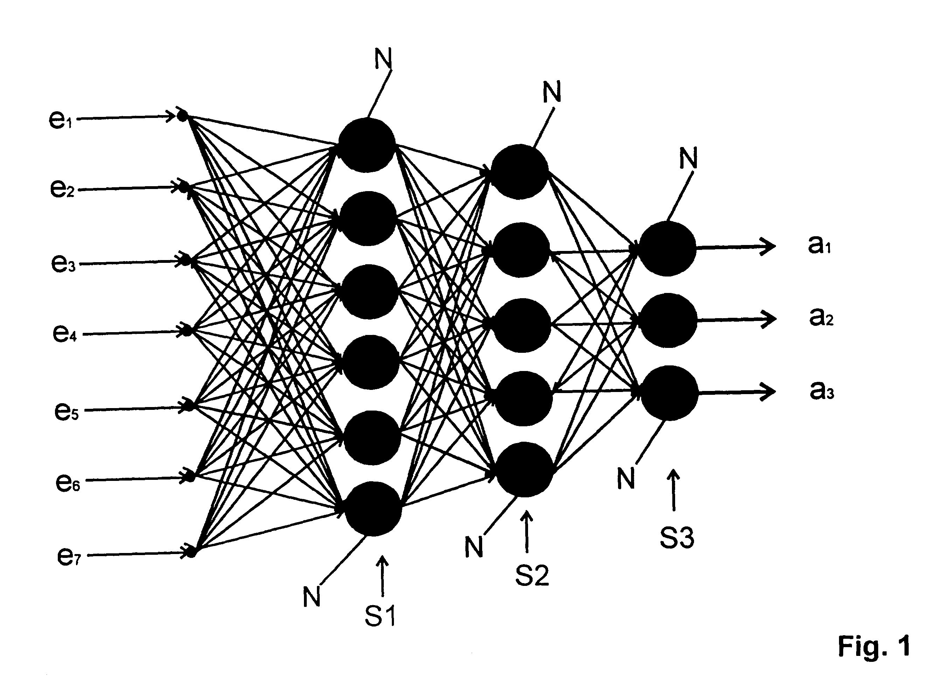

Ein neuronales Prozeßmodell stellt ein mit Prozeßdaten trainiertes künstliches neuronales Netz dar. Fig. 1 zeigt eine schematische Darstellung eines bekannten neuronalen Netzes mit drei Schichten S1, S2, S3, wobei die Eingangsschicht S1 6 Neuronen N, die verborgene Schicht S2 5 Neuronen N und die Ausgangsschicht S3 3 Neuronen N enthält. Das neuronale Netz weist 7 Eingangsgrößen $e_1$ bis $e_7$ und 3 Ausgangsgrößen $a_1$ bis $a_3$ auf. Neben dieser einfachen Feed-Forward-Topologie sind noch viele andere Arten der Vernetzung der Neuronen möglich. So können nicht nur weitere verborgene Schichten in das neuronale Netz eingeführt werden, sondern es können auch Schichten entfernt werden. Ferner können auch rückgekoppelte Strukturen aufgebaut werden. Durch die Einstellung der Gewichte der einzelnen Neuronen werden bei vorgegebener Topologie des neuronalen Netzes den Eingangsgrößen $e_1$ bis $e_7$ bestimmte Ausgangsgrößen $a_1$ bis $a_3$

zugeordnet.

Zur Vorhersage von zukünftigen oder nicht meßbaren Prozeßzuständen wird das neuronale Netz mit einem Datensatz nach einem vorgegebenen Algorithmus z.B. durch Fehler-Rückwärtsfortschreibung trainiert. Ein solcher Trainingsdatensatz besteht aus einer endlichen Anzahl von Eingangs- und Ausgangs-Vektoren, wobei jeder Eingangsvektor im vorliegenden Beispiel aus 7 Prozeßmeßgrößen und jeder Ausgangsvektor aus drei Ausgangsgrößen besteht.

Bei der neuromodellgestützten Regelung werden die Ausgangsgrößen des mit den Prozeßmeßgrößen trainierten neuronalen Prozeßmodells einem Regler zugeführt, der die Ausgangsgrößen dann zur Regelung des Prozesses verwendet. Das Zusammenspiel zwischen dem Regler und dem vorhersagenden Prozeßmodell wird als prediktive und/oder modellgestützte Regelung bezeichnet.

Bei dem erfindungsgemäßen Verfahren werden die Prozeßmeßgrößen in mindestens zwei getrennten Verarbeitungssträngen verarbeitet, wobei jeder Verarbeitungsstrang ein mit gleichen Daten trainiertes neuronales Prozeßmodell unterschiedlicher Ausbildung enthält. Dabei nimmt der Vorhersagefehler mit zunehmender Anzahl der Verarbeitungsstränge ab.

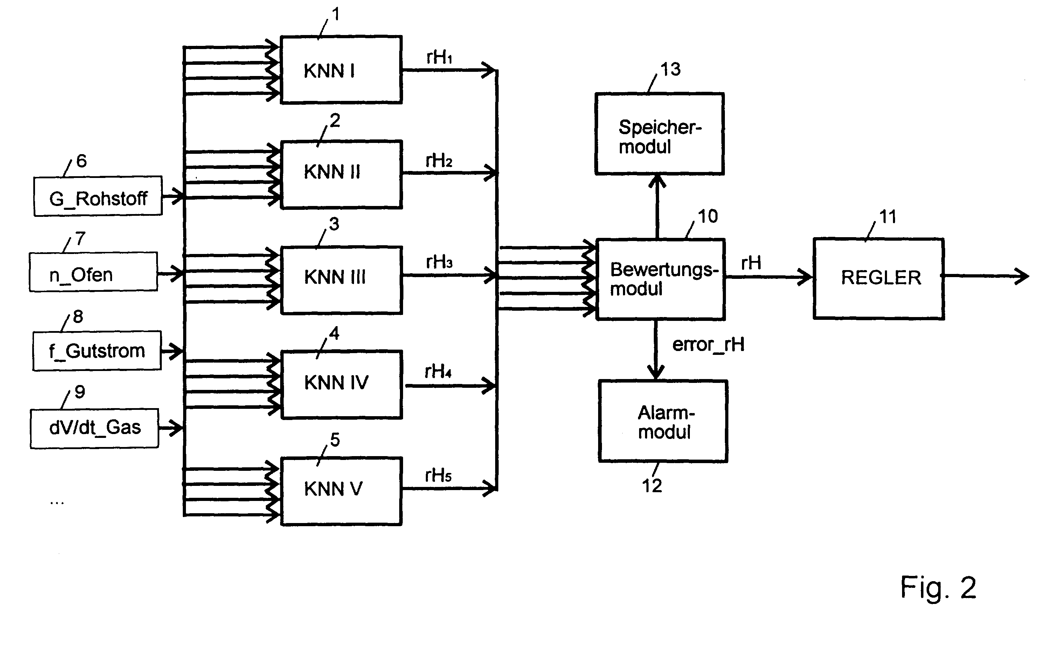

Fig. 2 zeigt eine schematische Darstellung zur Veranschaulichung der neuromodellgestützten Prozeßregelung gemäß der Erfindung. Bei diesem Ausführungsbeispiel sind fünf neuronale Prozeßmodelle 1 bis 5 der in Fig. 1 gezeigten Art parallel geschaltet. Jedes neuronale Prozeßmodell 1 bis 5 hat vier Eingänge und einen Ausgang. An den vier Eingängen der neuronalen Prozeßmodelle liegen die von den vier Meßstellen 6 bis 9 ermittelten Prozeßmeßgrößen. Die neuronalen Prozeßmodelle sind mit den gleichen Prozeßmeßgrößen bei unterschiedlicher Anfangsinitialisierung der Gewichte ihrer Neuronen trainiert. Ansonsten unterscheiden sich die einzelnen neuronalen Prozeßmodelle nicht voneinander. Die Ausgangsgrößen der in den einzelnen Verarbeitungssträngen angeordneten neuronalen Prozeßmodelle empfängt ein Bewertungsmodul 10. Das Bewertungsmodul 10 ermittelt aus den Ausgangsgrößen einen Wert, der einem Regler 11 zur Regelung des Prozesses zugeführt wird. Der Regler 10 kann ein konventioneller Regler oder ein Fuzzy-Regler sein. Das Bewertungsmodul 10 ist einerseits über eine Signalleitung mit einem Alarmmodul 12 und andererseits über eine Datenleitung mit einem Speichermodul 13 verbunden.

Nachfolgend wird das Training der neuronalen Netze KNN I bis KNN V und die neuromodellgestützte Regelung anhand einer verfahrenstechnischen Anlage zur Trocknung von mineralischen Materialien, z.B. Kaolin erläutert. Kaolin ist ein sehr feiner Quarzstaub, der in natürlichen Lagerstätten mit 30-40% Feuchtigkeit vorkommt. Nach der Reinigung wird das Produkt in großen Drehrohröfen von ca. 25 m Länge getrocknet. Das Produkt wird in das obere Ende der drehend leicht geneigten Metallröhre des Ofens mittels eines Fließbandes kontinuierlich aus einem Silo hineingefördert. In den Ofen wird ferner 800°C heiße Luft aus einem Öl- oder Gasbrenner geleitet. Das Produkt wird durch die Drehbewegung des schräggestellten Rohres langsam abwärts befördert. Nach 6-10 Minuten Totzeit hat das Material den Ofen durchwandert.

Die Produktfeuchte rH ist nur über Laborproben bestimmbar und schwankt stark. Denn Regen, Luftfeuchteschwankungen und wechselnde Außentemperaturen führen zu ständigen Veränderungen der Feuchte des außen auf Halde liegenden und dem Drehrohrofen zugeführten Materials.

Im Rohrstoffbeschicker der Anlage befindet sich die in Fig. 2 mit dem Bezugszeichen 1 versehene Meßstelle, mit der die Rohstoffeuchte als Leitfähigkeit (G_Rohstoff) mit ausreichender Genauigkeit erfaßt wird. Die Meßstellen 7 bis 9 erfassen die Drehzahl des Ofens (n_Ofen), den als Frequenz des Förder-Kastenbeschickers gegebenen Mengestrom des Rohstoffes (f_Gutstrom) sowie den als Gasstrom gegebenen Energiestrom (dV/dt_Gas).

Da das System deterministisch ist, kann aus der Rohstoffeuchte G_Rohstoff, der Drehzahl des Ofens n_Ofen, dem Mengestrom des Rohstoffs f_Gutstrom sowie dem Energiestrom dV/dt_Gas die Produktfeuchte rH_Produkt mittels eines neuronalen Prozeßmodells vorhergesagt werden, das die vier Eingangsgrößen auf die eine Ausgangsgröße abbildet, so daß es die folgende Funktion wiedergibt:

rH_Produkt=f(G_Rohstoff;n_Ofen;f_Gutstrom; dV/dt_Gas)

Hierzu wird das neuronale Netz mit einem Datensatz von Prozeßmeßgrößen trainiert, in denen der gesamte Betriebsbereich der zugeordneten Vektoren der vier Eingangsgrößen des neuronalen Netzes und die Ausgangsgröße dargestellt sind. Nach dem training ist das neuronale Netz in der Lage aus einem gegebenen Eingangsvektor [G_Rohstoff;n_Ofen;f_Gutstrom; dV/dt_Gas] die Ausgangsgröße rH_Produkt zu bestimmen. Wird bei einer Abfrage der Ausgangsgröße ein Bereich im Werteraum erreicht, welcher nicht in den Trainingsdaten enthalten war, extrapoliert das neuronale Netz. Je nach Lage des angefragten Punktes im Werteraum kann diese Extrapolation zu einem richtigen oder falschen Ergebnis führen.

Bei den neuronalen Prozeßmodellen 1 bis 5, die in den einzelnen Verarbeitungszweigen angeordnet sind, handelt es sich nun um neuronale Netze KNN I bis KNN V, die bei unterschiedlicher Anfangsinitialisierung der Gewichte ihrer Neuronen mit denselben Prozeßmeßgrößen trainiert worden sind, wobei die Eingangsgrößen mittels der Meßstellen 6 bis 9 gemessen und die jeweiligen Ausgangsgrößen durch Laborproben ermittelt worden sind.

Während der Prozeßregeleung werden die Prozeßmeßgrößen, d.h. die Rohstoffeuchte, die Drehzahl des Ofens, der Mengestrom des Rohstoffs sowie der Energiestrom mittels der Meßstellen 6 bis 9 laufend ermittelt und an die Eingänge der parallelgeschalteten neuronalen Prozeßmodelle 1 bis 5 gelegt. Das Bewertungsmodul 10 berechnet aus den fünf Ausgangsgrößen $rH_1$ bis $rH_5$ der neuronalen Prozeßmodelle den Zentralwert rH. Dieser wird zur Regelung des Prozesses dem Regler 11 zugeführt. Der Regler senkt beispielsweise die Energiezufuhr oder steigert den Mengestrom des Rohstoffs, wenn die von den neuronalen Prozeßmodellen 1 bis 5 vorhergesagte Feuchte rH des zukünftigen Produktes zu niedrig werden droht (Prediktive Regelung). Zur Erkennung von fehlerhaften Vorhersagen werden die Ausgangsgrößen $rH_1$ bis $rH_5$ der neuronalen Prozeßmodelle 1 bis 5 in dem Bewertungsmodul 10 miteinander verglichen. Wenn die fünf unterschiedlichen Prozeßmodelle korrekt extrapolieren, d.h. sie sind "in der Nähe" der Trainingsstützstellen, weichen deren Ergebnisse nur geringfügig voneinander ab. Extrapolieren die Netze ungenau, weichen deren Ergebnisse erheblich voneinander ab.

Zur Abschätzung des Fehlers berechnet das Bewertungsmodul 10 den Mittelwert $R_M$ und aus dem Mittelwert die Standardabweichung $R_S$ nach technischer Gewichtung wie folgt:

$$R_S = \frac{1}{4} \sqrt{\sum_{i=1}^{5} (R_i - R_M)^2}$$

wobei

$$R_M = \frac{1}{5} \sum_{i=1}^{5} R_i$$

Die Standardabweichung $R_S$ wird ferner in dem Bewertungsmodul 10 mit einem vorgegebenen Grenzwert verglichen. Für den Fall, daß die Standardabweichung den Grenzwert überschreitet, gibt das Bewertungsmodul 10 über die Signalleitung ein Warnsignal error_rH an das Warnmodul 12 ab, das einen akustischen und/oder optischen Alarm gibt, so daß die Prozeßregelung abgeschaltet werden und auf Handbetrieb umgeschaltet werden kann. Die Prozeßregelung kann aber auch automatisch bei Überschreiten des Grenzwertes unterbrochen werden. Ferner werden die Prozeßmeßgrößen, die zu einem Vorhersagefehler der Feuchte des zukünftigen Produktes führen, in dem Speichermodul 13 gespeichert. Diese Prozeßmeßgrößen werden dann für ein weiteres Training der neuronalen Netzwerke KNN I bis KNN V der einzelnen Prozeßmodelle 1 bis 5 herangezogen.

Im vorliegenden Fall liefert jedes neuronale Prozeßmodell nur eine Ausgangsgröße. Für den Fall, daß jedes Prozeßmodell mehrere Ausgänge hat, werden die jeweils einander entsprechenden Ausgangsgrößen in je einem Bewertungsmodul miteinander verglichen.

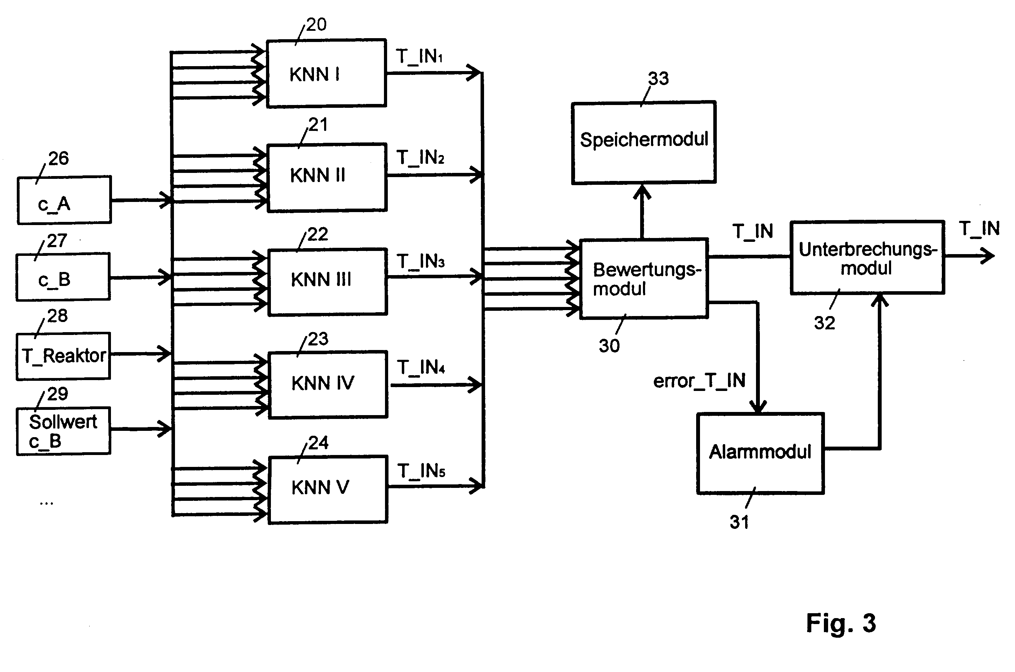

Nachfolgend wird unter Bezugnahme auf Fig. 3 eine neuronale Prozeßregelung eines Rührreaktors beschrieben. In dem Rührreaktor stellt sich ein chemisches Gleichgewicht zwischen den Substanzen A und B ein, die eine Konzentration c_A und c_B haben. Das Gleichgewicht der Substanzen ist i.a. abhängig von der Temperatur im Reaktor T_Reaktor. Die Reaktion ist endotherm, d.h. mit Wärmeaufnahme verbunden. Daher ist die Reaktortemperatur eine Gleichgewichtstemperatur, welche abhängig ist von der Konzentration der Substanzen, deren Reaktionsgeschwindigkeit, der Wärmeabfuhr durch den kontinuierlichen Abzug der Mischung und der Wärmezufuhr im Produktzulauf. Ziel des Prozesses ist hier die Herstellung einer Lösung mit einer bestimmten Konzentration B (Sollwert _c_B). Dies kann nun dadurch erreicht werden, daß bei gleichen Konzentrationen c_A und c_B der Ausgangsstoffe A,B und gleichen Stoffstrom die Temperatur des Eduktes im Reaktoreinlauf T_IN verändert wird.

Zur Erzeugung eines neuronalen Prozeßreglers werden die Trainingsdaten in ihrer Ursächlichkeit "invertiert", d.h. ein neuronales Netz wird nicht mehr darauf trainiert, um aus einer Ursache eine Wirkung vorherzusagen (prediktive Regelung), sondern um aus einer bestimmten Wirkung (Sollwert) eine diese hervorrufende Ursache (Stellgröße) zu ermitteln. Diese wird dann auf den Prozeß gegeben, damit dieser den Sollwert anstrebt. Ein derartiges invertierendes Modell ($M^{-1}$) wird auch als "Inverses Prozeßmodell" bezeichnet und entspricht einen Regler.

Die Trainingsdaten können über den Prozeß oder über ein anderes neuronales oder konventionelles Prozeßmodell gewonnen werden, in dem die Temperatur des Eduktes im Reaktoreinlauf T_IN am Prozeß oder am Modell "ausprobiert" und alle Versuche als Trainingsdatensatz aufgeschrieben werden. Es ergibt sich dann eine Vektorgleichung der folgenden Form, welche von dem neuronalen Netz erlernt wird:

T_IN=f[c_A;c_B;T_Reaktor;Sollwert_c_B]

Bei der neuronalen Prozeßregelung gemäß der Erfindung werden die Prozeßmeßgrößen in fünf Verarbeitungssträngen verarbeitet, die jeweils einen neuronalen Prozeßregler 20 bis 24 mit vier Eingängen und einem Ausgang enthalten, wobei die neuronalen Netze der Prozeßregler auf die oben beschriebene Weise mit den gleichen gemessenen oder berechneten Prozeßmeßgrößen aber bei unterschiedlicher Anfangsinitialisierung der Gewichte ihrer Neuronen trainiert worden sind (Fig. 3).

Die Prozeßmeßgrößen werden mittels der Meßstellen 26 bis 29 laufend erfaßt und an die Eingänge der neuronalen Prozeßregler 20 bis 24 gelegt. Die Ausgänge der neuronalen Prozeßregler werden einem Bewertungsmodul 30 zugeführt, das wie bei dem unter Bezugnahme auf Fig. 2 beschriebenen Ausführungsbeispiel die Ausgangsgrößen T_IN$_1$ bis T_IN$_5$ miteinander vergleicht. In dem Bewertungsmodul 30 wird aus den Ausgangsgrößen T_IN$_1$ bis T_IN$_5$ der Zentralwert T_IN ermittelt, der über eine Datenleitung als Stellgröße ausgegeben wird. Für den Fall, daß die Standardabweichung $R_S$ größer als ein vorgegebener Grenzwert ist, gibt das Bewertungsmodul 30 über eine Signalleitung ein Alarmsignal error_T_IN an ein Alarmmodul 31 aus, das einen akustischen und/oder optischen Alarm gibt. Ferner führt das Alarmmodul 31 über eine weitere Signalleitung ein Steuersignal einem Unterbrechungsmodul 32 zu, das bei einer fehlerhaften Vorhersage die Ausgabe der neuen Stellgröße T_IN abschaltet und den letzten plausiblen Wert als Stellgröße ausgibt. Damit wirkt der Neuroregler nur so lange wie er hinreichend plausibel ist. Die zu einem Vorhersagefehler führenden Prozeßmeßgrößen werden ferner in einem Speichermodul 33, das über eine Datenleitung mit dem Bewertungsmodul 30 in Verbindung steht, für weitere Lernschritte abgespeichert.

**Patentansprüche**

1. Verfahren zur Erkennung von fehlerhaften Vorhersagen in einer neuromodellgestützten Prozeßregelung, bei der ein mit Prozeßmeßgrößen trainiertes neuronales Netz Aussagen über zukünftige und/ oder nicht meßbare Prozeßzustände trifft, die von einem Regler (11) zur Regelung des Prozesses verwendet werden, wobei die Verarbeitung der Prozeßmeßgrößen in mindestens zwei getrennten Verarbeitungssträngen erfolgt, dadurch gekennzeichnet, daß jeder Verarbeitungsstrang ein mit gleichen Daten trainiertes neuronales Prozeßmodell (1 bis 5) enthält, wobei die neuronalen Prozeßmodelle der einzelnen Verarbeitungsstränge unterschiedlich ausgebildet sind, daß die Ausgangsgrößen der neuronalen Prozeßmodelle miteinander verglichen werden und daß aus den Abweichungen der Ausgangsgrößen auf fehlerhafte Vorhersagen des Prozeßzustandes geschlossen wird.

2. Verfahren nach Anspruch 1, dadurch gekennzeichnet, daß die zu einem Vorhersagefehler des Prozeßzustandes führenden Prozeßmeßgrößen für ein weiteres Training der neuronalen Prozeßmodelle (1 bis 5) mit diesen Prozeßmeßgrößen gespeichert werden.

3. Verfahren nach Anspruch 1 oder 2, dadurch gekennzeichnet, daß aus den einander entsprechenden Ausgangsgrößen der neuronalen Prozeßmodelle (1 bis 5) die Standardabweichung ($R_S$) und/ oder Streuung berechnet wird, daß die ermittelte Standardabweichung und/oder Streuung mit einem vorgegebenen Grenzwert verglichen wird und daß auf eine fehlerhafte Vorhersage bei Überschreiten des Grenzwertes geschlossen wird.

4. Verfahren nach einem der Ansprüche 1 bis 3, dadurch gekennzeichnet, daß aus den einander entsprechenden Ausgangsgrößen der neuronalen Prozeßmodelle (1 bis 5) ein Wert ermittelt wird, welcher von einem Regler (11) zum Regeln des Prozesses verwendet wird.

5. Verfahren nach Anspruch 4, dadurch gekennzeichnet, daß der Wert der unterschiedlichen Ausgangsgrößen, welcher von dem Regler (11) zur Regelung des Prozesses verwendet wird, der Zentralwert oder der Mittelwert der Ausgangsgrößen der neuronalen Prozeßmodelle (1 bis 5) ist.

6. Verfahren zur Erkennung von fehlerhaften Vorhersagen in einer neuronalen Prozeßregelung, bei der ein neuronales Netz mit gemessenen oder berechneten Prozeßmeßgrößen derart trainiert wird, daß die Ausgangsgrößen des neuronalen Netzes entweder auf Sollwerte und/oder Stellgrößen des Prozesses einwirken, wobei die Verarbeitung der Prozeßmeßgrößen in mindestens zwei getrennten Verarbeitungssträngen erfolgt, dadurch gekennzeichnet, daß jeder Verarbeitungsstrang einen mit gleichen Daten trainierten neuronalen Prozeßregler (10 bis 14) enthält, wobei die neuronalen Prozeßregler der einzelnen Verarbeitungsstränge unterschiedlich ausgebildet sind, daß die Ausgangsgrößen der neuronalen Prozeßregler miteinander verglichen werden und daß aus den Abweichungen der Ausgangsgrößen auf fehlerhafte Ausgaben des/der neuronalen Prozeßregler (10 bis 14) geschlossen wird.

7. Verfahren nach Anspruch 6, dadurch gekennzeichnet, daß die zu einem Vorhersagefehler des Prozeßzustandes führenden Prozeßmeßgrößen für ein weiteres Training der neuronalen Prozeßregler (10 bis 14) mit diesen Prozeßmeßgrößen gespeichert werden.

8. Verfahren nach Anspruch 6 oder 7, dadurch gekennzeichnet, daß aus den einander entsprechenden Ausgangsgrößen der neuronalen Prozeßregler (10 bis 14) die Standardabweichung ($R_s$) und/oder Streuung berechnet wird, daß die ermittelte Standardabweichung oder Streuung mit einem vorgegebenen Grenzwert verglichen wird und daß auf eine fehlerhafte Vorhersage bei Überschreiten des Grenzwertes geschlossen wird.

9. Verfahren nach einem der Ansprüche 5 bis 8, dadurch gekennzeichnet, daß aus den einander entsprechenden Ausgangsgrößen der neuronalen Prozeßregler (10 bis 14) ein Wert ermittelt wird, der als Sollwert herangezogen wird.

10. Verfahren nach Anspruch 9, dadurch gekennzeichnet, daß der Wert der einander entsprechenden Ausgangsgrößen, der als Sollwert herangezogen wird, der Zentralwert oder der Mittelwert der Ausgangsgrößen der neuronalen Prozeßregler (10 bis 14) ist.

**Claims**

1. A method of recognising faulty predictions in a neuromodel-assisted process control system in which a neurone network trained with measured process values makes statements concerning future and/or immeasurable process situations which are used by a controller (11) to control the process, whereby the processing of the measured process values takes place in at least two separate processing lines, characterised in that each processing line contains a neurone process model (1 to 5) trained with identical data, the neurone process models of the individual processing lines being differently constructed and in that the output values from the neurone process models are compared with one another and in that from the deviations of the output values, predictions of the process situation are deduced as being faulty.

2. A method according to claim 1, characterised in that the measured process values which lead to a prediction fault concerning the process situation are memorised with these measured process values for further training of the neurone process models (1 to 5).

3. A method according to claim 1 or 2, characterised in that from the output values from the neurone process models (1 to 5) which correspond to one another, the standard deviation ($R_s$) and/or spread is computed and in that the ascertained standard deviation and/or spread is compared with a preset limit value and in that if the limit value is exceeded the conclusion is that the prediction is faulty.

4. A method according to one of claims 1 to 3, characterised in that from the output values of the neurone process models (I to 5) which correspond to one another, a value is ascertained which is used by a controller (11) to control the process.

5. A method according to claim 4, characterised in that the value of the different output values which is used by the controller (11) to control the process, is the central value or mean value of the output values from the neurone process models (1 to 5)

6. A method of recognising faulty predictions in a neurone process control system in which a neurone network is so trained with measured or computed measured process values that the output values of the neurone network act either on desired values and/or manipulated variables of the process, whereby the processing of the measured process values takes place in at least two processing lines, characterised in that each processing line contains a neurone process controller (10 to 14) trained with identical data, whereby the neurone process controllers of the individual processing lines are differently constructed and in that the output values of the neurone process controllers are compared with one another and in that from the deviations in the output values, it is deduced that the predictions from the neurone process controller(s) (10 to 14) are faulty.

7. A method according to claim 6, characterised in that the measured process values which lead to a faulty prediction of the process situation are memorised for further training of the neurone process controllers (10 to 14) with these measured process values

8. A method according to claim 6 or 7, characterised in that from the output values of the neurone process controllers (10 to 14) which correspond to one another, the standard deviation ($R_s$) and/or spread is computed and in that the ascertained standard deviation or spread is compared with a preset limit value and in that if the limit value is exceeded it is deduced that a prediction is faulty

9. A method according to one of claims 6 to 8, characterised in that from the output values of the neurone process controllers (10 to 14) which correspond to one another a value is ascertained which is used as a desired value.

10. A method according to claim 9, characterised in that the value of the output values which correspond to one another and which is used as a desired value, is the central value or mean value of the output values of the neurone process controllers (10 to 14).

**Revendications**

1. Procédé pour l'identification de prédictions erronées dans une technologie de processus industriels s'appuyant sur un modèle inspiré des neurones dans laquelle un réseau neuronal entraîné avec des variables du processus industriel à mesurer fait des déclarations concernant des états du processus industriel futurs et/ou non mesurables qui sont utilisés par un mécanisme de réglage (11) pour le réglage du processus industriel, dans lequel le traitement des variables du processus industriel à mesurer a lieu dans au moins deux phases de traitement séparées, caractérisé en ce que chaque phase de traitement contient un modèle neuronal de processus industriel (1 à 9) entraîné avec des données identiques, dans lequel les modèles neuronaux des processus industriels des phases individuelles de traitement sont réalisés de manière différente, en ce que les variables de sortie des modèles neuronaux des processus industriels sont comparées les unes aux autres et en ce que, à partir des divergences des variables de sortie, on conclut à des prédictions erronées de l'état du processus industriel.

2. Procédé selon la revendication 1, caractérisé en ce que les variables du processus industriel à mesurer donnant lieu à une erreur de prédiction de l'état du processus industriel sont mémorisées pour un entraînement ultérieur des modèles neuronaux des processus industriels (1 à 5) avec ces variables du processus industriel à mesurer.

3. Procédé selon la revendication 1 ou 2, caractérisé en ce qu'on calcule, à partir des variables de sortie mutuellement correspondantes des modèles neuronaux de processus industriels (1 à 5), l'écart-type ($R_s$) et/ou la dispersion, en ce qu'on compare l'écart-type et/ou la dispersion déterminée avec une valeur limite prédéfinie et en ce qu'on conclut à une prédiction erronée lors d'un dépassement de la valeur limite vers le haut.

4. Procédé selon l'une quelconque des revendications 1 à 3, caractérisé en ce que, à partir des variables de sortie mutuellement correspondantes des modèles neuronaux de processus industriels (1 à 5), on détermine une valeur qui est utilisée par un mécanisme de réglage (11) pour le réglage du processus industriel.

5. Procédé selon la revendication 4, caractérisé en ce que la valeur des variables de sortie différentes, qui est utilisée par le mécanisme de réglage (11) pour le réglage du processus industriel, est la valeur centrale ou la valeur moyenne des variables de sortie des modèles neuronaux de processus industriels (1 à 5).

6. Procédé pour l'identification de prédictions erronées dans une technologie neuronale de processus industriels dans laquelle un réseau neuronal est entraîné avec des variables du processus industriel à mesurer qui ont été mesurées et calculées, de telle sorte que les variables de sortie du réseau neuronal agissent sur des valeurs de consigne et/ou sur des variables de réglage du processus industriel, dans lequel le traitement des variables du processus industriel à mesurer a lieu dans au moins deux phases de traitement séparées, caractérisé en ce chaque phase de traitement contient un mécanisme de réglage neuronal de processus industriel (10 à 14) entraîné avec des données identiques, dans lequel les mécanismes de réglage neuronaux des processus industriels des phases de traitement individuel sont réalisés de manière différente, en ce qu'on compare les unes avec les autres les variables de sortie des mécanismes de réglage neuronaux des processus industriels et en ce qu'à partir des divergences des variables de sortie, on conclut à des déclarations erronées du ou des mécanismes de réglage neuronaux des processus industriels (10 à 14).

7. Procédé selon la revendication 6, caractérisé en ce que les variables du processus industriel à mesurer donnant lieu à une erreur de prédiction de l'état du processus industriel sont mémorisées pour un entraînement ultérieur des mécanismes de réglage neuronaux des processus industriels (10 à 14) avec ces variables du processus industriel à mesurer.

8. Procédé selon la revendication 6 ou 7, caractérisé en ce qu'on calcule, à partir des variables de sortie mutuellement correspondantes des mécanismes de réglage neuronaux de processus industriels (1 à 5), l'écart-type ($R_s$) et/ou la dispersion, en ce qu'on compare l'écart-type ou la dispersion déterminée avec une valeur limite prédéfinie et en ce qu'on conclut à une prédiction erronée lors d'un dépassement de la valeur limite vers le haut.

9. Procédé selon l'une quelconque des revendications 5 à 8, caractérisé en ce que, à partir des variables de sortie mutuellement correspondantes des mécanismes de réglage neuronaux des processus industriels (10 à 14), on détermine une valeur que l'on prend comme référence à titre de valeur de consigne.

10. Procédé selon la revendication 9, caractérisé en ce que la valeur des variables de sortie mutuellement correspondantes, qui est prise comme référence à titre de valeur de consigne, est la valeur centrale ou la valeur moyenne des variables de sortie des mécanismes de réglage neuronaux des processus industriels (10 à 14).

Fig. 1

e₁ e₂ e₃ e₄ e₅ e₆ e₇

N S1 N S2 N S3

a₁ a₂ a₃

EP 0 762 245 B1

Fig. 2

Fig. 3